Europäisches Patentamt

European Patent Office

Office européen des brevets

(11) Publication number: **0 188 027 B1**

# EUROPEAN PATENT SPECIFICATION

(45) Date of publication of patent specification: **12.02.92**  (51) Int. Cl.⁵: **H01R  3/00**, H01R 13/523, H01G 9/00

(21) Application number: **85202102.1**

(22) Date of filing: **18.12.85**

(54) **Capacitive underwater electrical connector.**

(30) Priority: **17.01.85 GB 8501155**

(43) Date of publication of application:
**23.07.86 Bulletin  86/30**

(45) Publication of the grant of the patent:
**12.02.92 Bulletin  92/07**

(84) Designated Contracting States:
**DE FR GB NL**

(56) References cited:
**US-A- 3 558 908**
**US-A- 4 030 058**
**US-A- 4 337 501**

(73) Proprietor: **SHELL INTERNATIONALE RE-
SEARCH MAATSCHAPPIJ B.V.
Carel van Bylandtlaan 30
NL-2596 HR Den Haag(NL)**

(72) Inventor: **van den Steen, Leon
Volmerlaan 6
NL-2288 GD Rijswijk(NL)**

Rank Xerox (UK) Business Services

## Description

The invention relates to a capacitive make-and-break connector for electrical signal or power coupling in an underwater environment. Under certain conditions in oil and gas production, for example marginal fields, extreme hostile sea conditions, large water depth, widely extending formations, etc., a part of the production installation can be located on the sea-bed. Then typically wellheads and pipeline manifolds are applied as subsea installations.

Currently the trend in subsea installations is towards "wet completions" which implies that the equipment is exposed to sea-water.

Systems have been developed for monitoring and controlling subsea installations. The demand on such systems is increasing when the installations are more complex, for example a number of wells producing in one sea-bed flowline or when installation is done beyond the generally accepted diving depth.

Subsea control systems may have a rather poor performance due to failing electrical interconnections between the sensors and actuators of these systems and the surface-mounted system parts.

The present invention relates, in particular, to a solution for these interconnecting problems.

Underwater electrical make-and-break connectors, such as, for example, required in electro-hydraulic control systems for subsea installations, have up till now been based either on the generally known conventional pin and bus principle or on inductive coupling as e.g. disclosed in US-A-4,030,058.

On the basis of reliability considerations the latter option is preferred in many modern subsea systems.

However, inductive couplers still have various disadvantages. Inductive couplers for the transmission of power (for example 1 kVA) are rather bulky. Due to their construction they generally possess a poor power factor, which deteriorates the total system efficiency substantially when interconnected in more than, say, four levels.

Moreover, due to the requirement that during its lifetime of, say, 25 years no water should enter the electric or magnetic parts, the construction is critical and consequently expensive.

Apart from the disadvantage of large size inductive signal couplers share the disadvantages of power couplers.

Moreover their relatively low impedance at high frequencies prohibits the transmission of high frequency signals (for example 100 kHz) from high impedance sources such as a piezoelectric crystal or a capacitive sensor.

It is therefore an object of the invention to provide an underwater electrical connector for electric signal or power transmission between the subsea installation parts to be coupled electrically, based upon capacitive coupling, which offers good characteristics both for power and signal applications.

It is another object of the invention to provide a simple, cheap and highly reliable sea-water tolerant capacitive underwater connector.

It is still another object of the invention to provide a capacitive underwater connector adapted to transmit signals of virtually unlimited upper frequency.

The invention therefore provides a capacitive make-and-break connector for electrical signal or power coupling in an underwater environment, including a capacitor, the said capacitor comprising first and second insulating housing members, said members being adapted for mechanical mating with each other, each member including a respective electrode, the electrodes being located opposite each other, when the housing members are mated together, said electrodes having means for connection to subsea installation parts to be capacitively coupled together, a cavity being formed between the electrodes, which cavity fills with sea water when the connector is submerged, wherein the electrode material is such that when it is exposed to an oxidizing environment, it develops a thin oxide layer acting as a dielectric.

As already indicated earlier, the electrical coupler of the invention has been based upon the principle of capacitive coupling of electrical circuits.

The theory of capacitive coupling as such is known to those skilled in the art and will not be described in further detail.

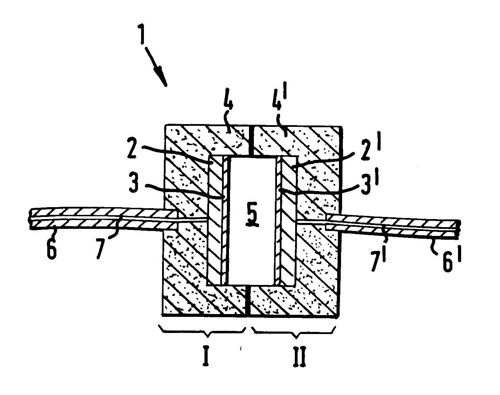

The invention will now be described by way of example in more detail by reference to the accompanying drawing, in which the figure represents schematically the capacitive connector of the invention.

Referring now to the figure a capacitive subsea connector 1 has been represented.

The connector 1 comprises a first member I and a second member II which are adapted for mechanical mating. Each said member I,II comprises an electrode 2,2' respectively which are located opposite to one another. The electrodes 2,2' may, for example, be metal plates.

The electrodes 2,2' are covered with a dielectric layer 3,3' respectively at their respective sides which are directed to one another.

The first and second members I,II which, for example, can be made of insulating material 4,4', mate mechanically in such a way that a cavity 5, completely or for the major part insulated from its sea environment, remains between the electrodes 2,2'.

When submerged, the cavity is filled with sea-water.

The members I,II are provided with any means 6,6' respectively, suitable for connecting these members to the respective subsea installation parts to be coupled capacitively (not shown for reasons of clarity).

These means 6,6' comprise electrical connections 7,7' respectively for connecting the electrodes 2,2' respectively to suitable electric parts of the subsea installations to be connected electrically.

The dielectric layers 3,3' may consist of any suitable material of good dielectric properties.

In an advantageous embodiment of the invention material such as titanium is used.

This material, when exposed to an oxidizing environment, like sea-water, develops a thin oxide skin which is used as a dielectric layer.

In advantageous embodiments of the invention the layers have a thickness in the 0.3-10 nm range and each plate may have an area varying from 1 cm$^2$ (for example for signal applications) to 1000 cm$^2$ (for example for high power applications).

The operation of the device of the invention is as follows.

When an alternating voltage is applied between the electrodes 2,2', a current starts to flow, bridging the dielectric layers 3,3' as a capacitive (displacement) current and the sea-water filled cavity 5 as a resistive (ion) current.

As sea-water is a reasonable conductor, the resistance of the cavity is low and can be neglected in comparison with the other impedances involved.

Measurements have shown that at 10 kHz the capacitive part of the current through the dielectric layers is several orders of magnitude above the resistive part (i.e. the part related to leakage through the oxide layer).

Thus, the connector is a "capacitive connector".

It will be appreciated that the electrodes may have any size and shape suitable for the purpose.

By increasing the size of the electrodes the power rating of a capacitive connector can be increased to any value. However, a limitation will be posed by the losses in the associated subsea cabling particularly due to the skin effect.

Calculations have shown that power ratings of 5 kVA are feasible with acceptable increase in cable complexity.

This rating is comparable to the maximum power rating of currently available inductive couplers.

## Claims

1. A capacitive make-and-break connector for electrical signal or power coupling in an underwater environment, including a capacitor, the said capacitor comprising first and second insulating housing members (I,II), said members being adapted for mechanical mating with each other, each member including a respective electrode (2,2'), the electrodes being located opposite each other, when the housing members are mated together, said electrodes having means (7,7') for connection to subsea installation parts to be capacitively coupled together, a cavity being formed between the electrodes, which cavity fills with sea water when the connector is submerged, wherein the electrode material is such that when it is exposed to an oxidizing environment, it develops a thin oxide layer acting as a dielectric.

2. The connector as claimed in claim 1, wherein the electrodes are plates.

3. The connector as claimed in claim 2, wherein the plates are provided with an oxide skin of titanium.

4. The connector as claimed in any one of claims 1-3, wherein the dielectric layers have a thickness in the 0.3-10 nm range.

5. The connector as claimed in any one of claims 1-4, wherein the first and second members are made of insulating material.

6. The connector as claimed in any one of claims 2-5, wherein the plates have an area in the 1-1000 cm$^2$ range.

## Revendications

1. Connecteur capacitif travail-repos pour couplage d'un signal électrique ou d'une énergie dans un environnement sous-marin, comprenant un condensateur, ledit condensateur comprenant des premier et second éléments de boîtier isolant (I, II), lesdits éléments étant destinés à s'ajuster mécaniquement l'un sur l'autre, chaque élément logeant une électrode respective (2, 2'), les électrodes étant placées en face l'une de l'autre lorsque les éléments de boîtier sont ajustés l'un sur l'autre, les électrodes comportant des moyens (7, 7') de connexion à des pièces d'une installation sous-marine devant être couplées capacitivement, une cavité étant formée entre les électrodes, cette cavité se remplissant d'eau de mer lorsque le connecteur est immergé, la matière des électrodes étant telle que lorsqu'elle est exposée à un environnement oxydant, elle forme une mince couche d'oxyde constituant un diélectrique.

2. Connecteur selon la revendication 1, dans lequel les électrodes sont des plaques.

3. Connecteur selon la revendication 2, dans lequel les plaques comportent un revêtement d'oxyde de titane.

4. Connecteur selon l'une quelconque des revendication 1 à 3, dans lequel les couches diélectriques ont une épaisseur de l'ordre de 0,3-10 nm.

5. Connecteur selon l'une quelconque des revendications 1 à 4, dans lequel les premier et second éléments sont en matière isolante.

6. Connecteur selon l'une quelconque des revendications 2 à 5, dans lequel les plaques ont une surface de l'ordre de 1-1000 cm$^2$.

**Patentansprüche**

1. Kapazitiver Schließ- und Unterbrechungsverbinder zur elektrischen Signal- oder Leistungskopplung unter Wasser, mit einem Kondensator, der erste und zweite isolierende Gehäuseteile (I, II) aufweist, die miteinander mechanisch zusammenfügbar sind, wobei jedes Teil eine entsprechende Elektrode (2, 2') aufweist und die Elektroden einander gegenüberliegend angeordnet sind, wenn die Gehäuseteile zusammengefügt sind, und wobei die Elektroden Mittel (7, 7') zum Anschluß an Teile einer Unterwasser-Installation aufweisen, die kapazitiv miteinander gekoppelt werden, einem zwischen den Elektroden gebildeten Hohlraum, der sich mit Meerwasser füllt, wenn der Verbinder untergetaucht ist, wobei das Elektrodenmaterial solcherart ist, daß es eine als Dielektrikum wirkende Oxidschicht ausbildet, wenn es einer oxidierenden Umgebung ausgesetzt ist.

2. Verbinder nach Anspruch 1, bei dem die Elektroden Platten sind.

3. Verbinder nach Anspruch 2, bei dem die Platten eine Titanoxidhaut aufweisen.

4. Verbinder nach einem der Ansprüche 1 bis 3, bei dem die Dielektrikumsschichten eine Dicke im Bereich von 0, 3 - 10 nm aufweisen.

5. Verbinder nach einem der Ansprüche 1 bis 4, bei dem die ersten und zweiten Teile aus isolierendem Material gefertigt sind.

6. Verbinder nach einem der Ansprüche 2 bis 5, bei dem die Platten eine Fläche im Bereich von 1 - 1000 cm$^2$ aufweisen.